# EUROPÄISCHE PATENTSCHRIFT

(11) **EP 0 712 145 B1**
(45) Veröffentlichungstag und Bekanntmachung des Hinweises auf die Patenterteilung: **07.01.1999**
(21) Anmeldenummer: 95115615.7
(22) Anmeldetag: 04.10.1995
(51) Int. Cl.: H01H 61/01, F03G 7/06

(54) **Antriebseinrichtung mit einem Antriebselement aus einer Formgedächtnislegierung**
Drive mechanism having a drive element of shape memory alloy
Mécanisme d'entraînement ayant un élément d'entraînement en alliage à mémoire

(30) Priorität: 14.11.1994 CH 3395/94
(43) Veröffentlichungstag der Anmeldung: 15.05.1996
(73) Patentinhaber: Landis & Gyr Technology Innovation AG, 6301 Zug (CH)
(72) Erfinder: Partel, Robert, CH-6300 Zug (CH)
(74) Vertreter: Müller, Hans-Jürgen, Dipl.-Ing.

(56) Entgegenhaltungen:
- DE-A- 4 209 815
- US-A- 3 858 141
- PATENT ABSTRACTS OF JAPAN vol. 010 no. 014 (M-447) ,21.Januar 1986 & JP-A-60 175777 (SHIGEO HIROSE) 9.September 1985,

## Beschreibung

Die Erfindung bezieht sich auf eine Antriebseinrichtung mit einem Antriebselement aus einer Formgedächtnislegierung gemäss dem Oberbegriff des Anspruchs 1. (US-A-3 858 141)

Solche Antriebseinrichtungen eignen sich beispielsweise zur Betätigung eines Ventilstössels an einem Ventil zur Steuerung oder Regelung des Durchflusses eines flüssigen oder gasförmigen Strömungsmediums in der Heizungs-, Lüftungs- und Klimatechnik.

Es ist bekannt (P. Tautzenberger et al, Anwendung von Memory-Legierungen in elektrischen Schaltgeräten, Zeitschrift Metall, Januar 1985), Formgedächtnislegierungen - die im Englischen mit "shape memory alloys" bezeichnet werden - in elektrischen Schaltgeräten einzusetzen und dabei den Einwegeffekt oder den Zweiwegeffekt einer Formgedächtnislegierung zum Schalten eines elektrischen Stromes zu nutzen.

Es ist weiter eine Antriebseinrichtung bekannt (DE-A-37 31 146), bei der ein zweiteiliges Element aus einer Formgedächtnislegierung so ausgestaltet ist, dass die beiden Teilelemente je im Einwegeffekt bezüglich ihrer Arbeitsrichtung gegensinnig einsetzbar sind.

Eine Nutzung des Formgedächtniseffektes einer Formgedächtnislegierung ist dann kritisch, wenn der Effekt eine reproduzierbare Bewegung entgegen einer relativ grossen Kraft erzeugen soll. So ist die Bewegung beispielsweise beim Stellen eines Ventils entgegen einer Kraft von etwa 100 N auszuführen. Der in diesem Fall erreichbare Weg der Bewegung ist im allgemeinen für eine hohe Zykluszahl nicht mehr reproduzierbar.

Der Erfindung liegt die Aufgabe zugrunde, eine geräuschlose Antriebseinrichtung für reversible Bewegungen zur Betätigung eines Stellgliedes so auszugestalten, dass die Antriebseinrichtung die für die Betätigung des Stellgliedes erforderliche Kraft aufbringt und die Bewegungen trotzdem für eine hohe Zykluszahl reproduzierbar sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: den Aufbau einer Antriebseinrichtung mit einem Antriebselement aus einer Formgedächtnislegierung,
- Fig. 2: das Funktionsprinzip der Antriebseinrichtung,
- Fig. 3: den prinzipiellen Verlauf einer Formänderung des Antriebselementes,
- Fig. 4: die Kornstruktur der Formgedächtnislegierung im austenitischen Zustand,
- Fig. 5: den qualitativen Verlauf des elektrischen Widerstandes des Antriebselementes,
- Fig. 6: ein Blockschaltbild zur elektrischen Ansteuerung des Antriebselementes,
- Fig. 7: ein Funktionsprinzip zur mechanischen Einstellung des Arbeitspunktes und
- Fig. 8: ein elektrisches Anschlussmittel für das Antriebselement.

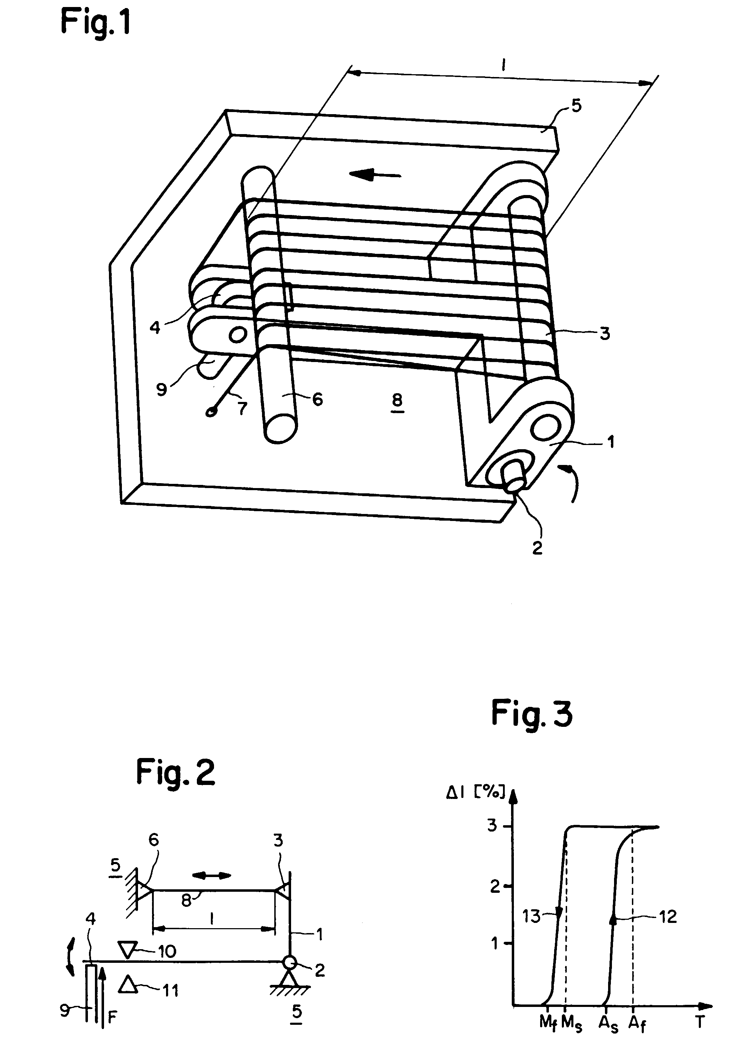

In der Fig. 1 bedeutet 1 einen um eine Achse 2 drehbar gelagerten Hebel, der an einem Ende einen ersten mit Vorteil parallel zur Achse 2 angeordneten Bolzen 3 und am anderen Ende ein Auflager 4 aufweist. Die Achse 2 ist an einem Gehäuse 5 fixiert, an dem in einem festen Abstand zur Achse 2 ein zweiter Bolzen 6 mit Vorteil ebenfalls parallel zur Achse 2 angeordnet und befestigt ist.

Um die beiden parallelen Bolzen 3 und 6 ist ein Draht 7 derart in mehreren Windungen gewickelt, dass die Windungen zwischen den beiden Bolzen 3 und 6 aufgespannt sind und so eine flache, einen grösseren Durchmesser 1 aufweisende Wicklung 8 bilden, durch welche die beiden Bolzen 3 und 4 mechanisch miteinander gekoppelt sind.

Der Hebel 1 ist über das Auflager 4 mit einem Stellglied gekoppelt. Das Stellglied ist hier ein Ventil mit einem Ventilstössel 9 zur Steuerung oder Regelung des Durchflusses eines flüssigen oder gasförmigen Strömungsmediums. Die dargestellte Antriebseinrichtung ist aber auch für andere Stellglieder, beispielsweise für Lüftungsklappen, einsetzbar.

Der Draht 7 und damit auch die Wicklung 8 bestehen aus einer Formgedächtnislegierung, wodurch die Wicklung 8 als ein geräuschloses Antriebselement zum Bewegen des Hebels 8 bzw. zum Antreiben des mit dem Hebel 1 über das Auflager 4 gekoppelten Stellgliedes einsetzbar ist.

Die Formgedächtnislegierung und der Draht 7 sind vorteilhafterweise so ausgewählt und vorbereitet, dass der Draht 7 sich verkürzt, wenn er über eine erste Verformungsstarttemperatur Aₛ erhitzt wird. Bei Temperaturen oberhalb der ersten Verformungsendtemperatur A_{f} ist die Formgedächtnislegierung im austenitischen Zustand.

In der Fig. 2 ist die vorteilhafte Antriebseinrichtung nach der Fig. 1 zur Verdeutlichung ihres Funktionsprinzips noch weiter abstrahiert dargestellt. Wird der Draht 7 und damit auch der grössere Durchmesser l der flachen Wicklung 8 durch eine Erwärmung des Drahtes 7 verkürzt, dreht sich der Hebel 1 entgegen dem Uhrzeigersinn um die Achse 2, da die Achse 2 und auch die Wicklung 8 am Gehäuse 5 befestigt sind. Durch die Erwärmung des Drahtes 7 ist der Hebel 1 gegen eine Rückstellkraft F von einem ersten Anschlag 10 weg gegen einen zweiten Anschlag 11 drehbar, wobei über das Auflager 4 der Ventilstössel 9 bzw. ein Stellglied betätigbar ist. Die Rückstellkraft F wird durch ein Rückstellelement erzeugt, wobei das Rückstellelement vorzugsweise eine Feder ist.

Mit einem Abkühlen des Drahtes 7 unter eine zweite Verformungsstarttemperatur Mₛ wird im Draht 7 Martensit ausgebildet, wodurch im abgekühlten Zustand insbesondere die Fliessgrenze des Drahtes 7 wesentlich reduziert wird. Bei Temperaturen unterhalb der zweiten Verformungsstarttemperatur Mₛ ist der Draht 7 und damit die Wicklung durch die Rückstellkraft F des Rückstellelementes streckbar, so dass der grössere Durchmesser l der Wicklung vergrössert wird. Durch das Abkühlen des Drahtes 7 ist der Hebel 1 durch die Rückstellkraft F vom zweiten Anschlag 11 weg gegen den ersten Anschlag 10 drehbar, wobei über das Auflager 4 der Ventilstössel 9 bzw. das Stellglied betätigbar ist.

Die beiden Anschläge 10 und 11 bestimmen eine erste Endlage bzw. eine zweite Endlage des Stellgliedes. Mit Vorteil sind die beiden Anschläge 10 und 11 am Gehäuse 5 und am Hebel 1 ausgebildet. Das Stellglied wird also durch die Erwärmung des Drahtes 7 in eine erste Endlage und durch Abkühlen des Drahtes 7 in eine zweite Endlage überführt.

Mit Vorteil ist das Rückstellelement im Stellglied integriert. Das Rückstellelement ist in einer vorteilhaften Variante der Antriebseinrichtung durch den mit einer Feder gegen den Hebel 1 gedrückten Stössel 9 verwirklicht.

Dadurch, dass die Wicklung 8 aus mehreren Windungen des Drahtes 7 aufgebaut ist, setzt sich die bei einer Erwärmung über die erste Verformungsstarttemperatur Aₛ auftretende Zugkraft zwischen den beiden Bolzen 3 und 6 aus mehreren mechanisch parallel wirkenden Teilkräften zusammen, wobei eine Teilkraft aus zwei parallel zum grösseren Durchmesser l der flachen Wicklung 8 auftretenden Einzelkräften einer Windung besteht. Die Zugkraft ist damit proportional zur Windungszahl der Wicklung 8.

Die beim Erwärmen respektive Abkühlen auftretende Formänderung Δl der als Antriebselement einsetzbaren Wicklung 8 ist in der Fig. 3 dargestellt. Beim Erwärmen des Drahtes 7 oberhalb der ersten Verformungsstarttemperatur Aₛ bis zu einer ersten Verformungsendtemperatur A_{f} tritt eine durch den sogenannten Gedächtniseffekt hervorgerufene erste Formänderung in der Richtung eines ersten Pfeiles 12 auf, während beim Abkühlen des Drahtes 7 unter die zweite Verformungsstarttemperatur Mₛ bis einer zweiten Verformungsendtemperatur M_{f} eine durch das Rückstellelement hervorgerufene zweite Formänderung in der Richtung eines zweiten Pfeiles 13 eintritt. Die beim Erwärmen auftretende erste Formänderung des Antriebselementes ist im wesentlichen eine Verkürzung während die beim Abkühlen auftretende zweite Verformung eine Streckung ist.

Dadurch, dass die als Antriebselement eingesetzte Wicklung 8 in vorteilhafter Art mehrere mechanisch parallel wirkende Windungen aufweist, ist auch mit einem relativ dünnen Draht 7 eine zum Betätigen des Stellgliedes benötigte Zugkraft erreichbar, indem die Windungszahl der Wicklung der erforderlichen Zugkraft angepasst wird. Die Zugkraft der Wicklung 8, die Rückstellkraft des Rückstellelementes und das Übersetzungsverhältnis des Hebels 1 sind in bekannter Art mit wenig Aufwand aufeinander abstimmbar. Durch die Gestaltung des drehbaren Hebels 1 ist ein am Stellglied erforderlicher mechanischer Hub in weiten Grenzen erreichbar.

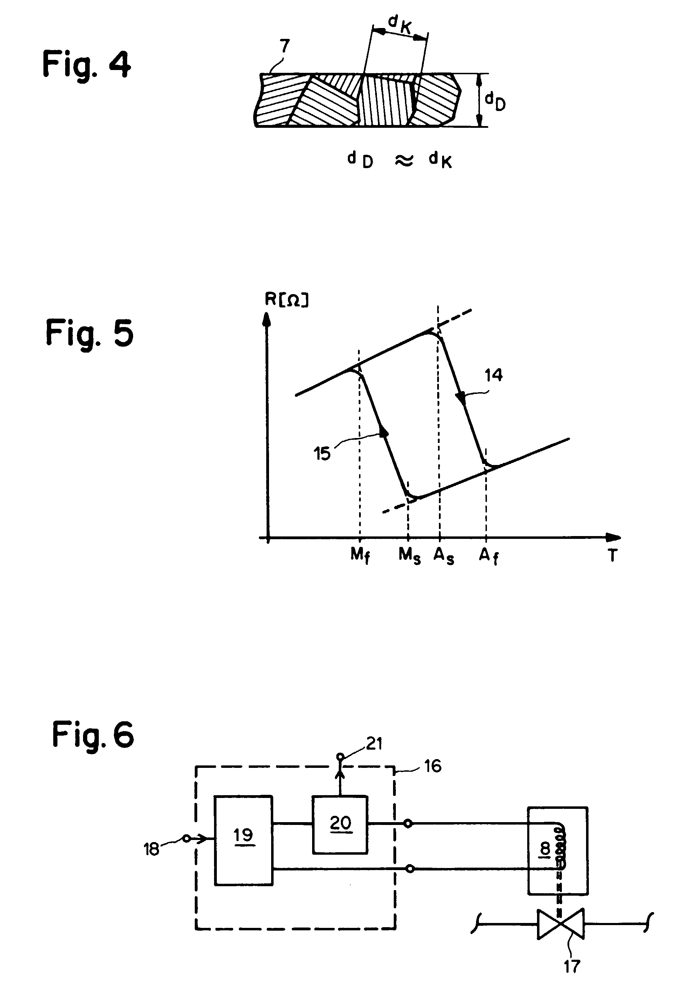

Bei Temperaturen oberhalb der ersten Verformungsstarttemperatur Aₛ, also im aufgeheizten Zustand des Drahtes 7, weist die Formgedächtnislegierung eine austenitische Mikrostruktur auf, wobei der gemittelte Durchmesser d_{K} eines kristallinen Kornes einen charakteristischen Wert aufweist. Bei einer Nickel-Titan-Legierung beträgt der gemittelte Durchmesser d_{K} des Kornes etwa 0,25 mm (S. Eucken: Progress in Shape Memory Alloys, DGM 1992, Seite 178). Ist der Durchmesser d_{D} des Drahtes 7 - wie in der Fig. 4 dargestellt - etwa gleich dem gemittelten Durchmesser d_{K} des Kornes der beim Antriebselement eingesetzten Formgedächtnislegierung, so ist die reversible Bewegung des Antriebselementes auch für hohe Zykluszahlen - beispielsweise für 10⁵ Bewegungszyklen - genügend genau reproduzierbar. Bei einer Nickel-Titan-Legierung ist der Durchmesser d_{D} des Drahtes 7 mit Vorteil im Bereich von 0,1 mm bis 0,4 mm. Weiter wird die Reproduzierbarkeit der reversiblen Bewegung verbessert, indem die zwischen der ersten Verformungsstarttemperatur Aₛ und der ersten Verformungsendtemperatur A_{f} auftretende Verkürzung relativ klein ist. Bei einer Nickel-Titan-Legierung wird mit Vorteil nur eine Verkürzung von etwa 3 % antrainiert.

Der elektrische Widerstand R der Formgedächtnislegierung weist in Abhängigkeit der Temperatur T einen hystereseförmigen Verlauf auf, welcher in der Fig. 5 qualitativ dargestellt ist. Bei einer entsprechenden Erwärmung oberhalb der ersten Verformungsstarttemperatur Aₛ erfährt der elektrische Widerstand eine ausgeprägte erste Änderung 14, während sich bei einer entsprechenden Abkühlung unter der zweiten Verformungsstarttemperatur Mₛ eine ausgeprägte zweite Änderung 15 einstellt.

Die als Antriebselement eingesetzte Wicklung 8 wird mit Vorteil elektrisch direkt geheizt, indem die Wicklung 8 schaltbar an eine Strom- oder Spannungsquelle angeschlossen wird. Grundsätzlich ist die Wicklung 8 in zwei verschiedenen Varianten elektrisch speisbar. In einer ersten Variante ist der Draht 7 so an eine elektrische Energiequelle angeschlossen, dass ein eingeschalteter Strom i jede Windung der Wicklung 8 durchfliesst, wobei also die einzelnen Windungen in Reihe geschaltet wirken. In einer zweiten Variante sind die einzelnen Windungen der Wicklung 8 parallel geschaltet, wobei auch eine Windung jeweils als Parallelschaltung von zwei Windungsabschnitten wirkt, welche je die Länge des grösseren Wicklungsdurchmessers l aufweisen.

In der ersten Variante sind die einzelnen Windungen der Wicklung 8 elektrisch voneinander isoliert gewickelt. Mit Vorteil wird die elektrische Isolation dadurch realisiert, dass die beiden als Wicklungsträger eingesetzen Bolzen 3 und 6 gegenüber der Wicklung 8 isoliert sind und zwischen den einzelnen Windungen ein isolierender Abstand eingehalten wird. Die beiden Bolzen 3 und 6 weisen beispielsweise eine Isolation aus Keramik oder einem hitzebeständigen Kunststoff auf.

Die zweite Variante hat gegenüber der ersten Variante den Vorteil, dass die elektrische Isolation zwischen dem Bolzen 3 bzw. 6 und der Wicklung entfällt. In der zweiten Variante wird zum Heizen mit Vorteil eine Stromquelle eingesetzt, die an den beiden Bolzen 3 und 6 angeschlossen ist.

Die Verformungsstarttemperatur Aₛ und Mₛ wie auch die Verformungsendtemperaturen A_{f} und M_{f} sind durch entsprechende Wahl der Formgedächtnislegierung in weiten Grenzen an eine Anwendung anpassbar.

Weist die Formgedächtnislegierung ein zweite Verformungsendtemperatur M_{f} auf, welche wesentlich über der Umgebungstemperatur der Antriebseinrichtung liegt, ist das Abkühlen des Antriebselementes durch Abschalten des Stromes im Draht 7 erreichbar. Beträgt bei einer Nickel-Titan-Legierung die zweite Verformungsstarttemperatur Mₛ beispielsweise etwa 55°C und die zweite Verformungsendtemperatur M_{f} etwa 35 C, dauert das Abkühlen bzw. Strecken des Antriebselementes nach dem Abschalten des Stromes im Draht 7 bei Raumtemperatur etwa 40 s.

In der Fig. 6 ist mit 16 eine vorteilhafte Steuereinrichtung der als Antriebselement für ein Ventil 17 einsetzbaren Wicklung 8 bezeichnet. Die an der Wicklung 8 angeschlossene Steuereinrichtung 16 weist eine über einen Steuereingang 18 steuerbare elektrische Energiequelle 19 und eine Messchaltung 20 auf. Die Energiequelle 19 ist vorteilhaft eine Konstantspannungs- oder eine Konstantstromquelle deren Ausgangswert über den Steuereingang 18 mindestens ein- und ausschaltbar ist. In weiteren Ausführungsvarianten ist der Ausgangswert der Energiequelle 19 über den Steuereingang 18 kontinuierlich oder in Stufen einstellbar.

Durch die Messschaltung 20 sind die beiden Änderungen 14 und 15 (Fig. 5) des elektrischen Widerstandes R der Wicklung 8 erfassbar. Dadurch, dass im Betrieb der Steuereinrichtung 16 der elektrische Widerstand 8 gemessen wird, ist in der Messschaltung 20 ein Signal für den Formzustand des Antriebselementes beziehungsweise ein Signal für den Öffnungszustand des Ventils 17 verfügbar. Das Signal ist an einem Ausgang 21 der Messschaltung 20 als Rückführsignal der erfindungsgemässen Antriebseinrichtung verfügbar. Ferner ist ein Momentanwert des Signales bei Bedarf in der Steuereinrichtung 16 speicherbar.

Durch die vorteilhafte Steuereinrichtung 16 ist ein Rückführsignal der Antriebseinrichtung verfügbar, ohne dass zur Gewinnung des Signals am Ventil 17 oder am Antriebselement bzw. der Wicklung 8 zusätzlicher Aufwand in Form einer Installation oder Montage zu leisten ist.

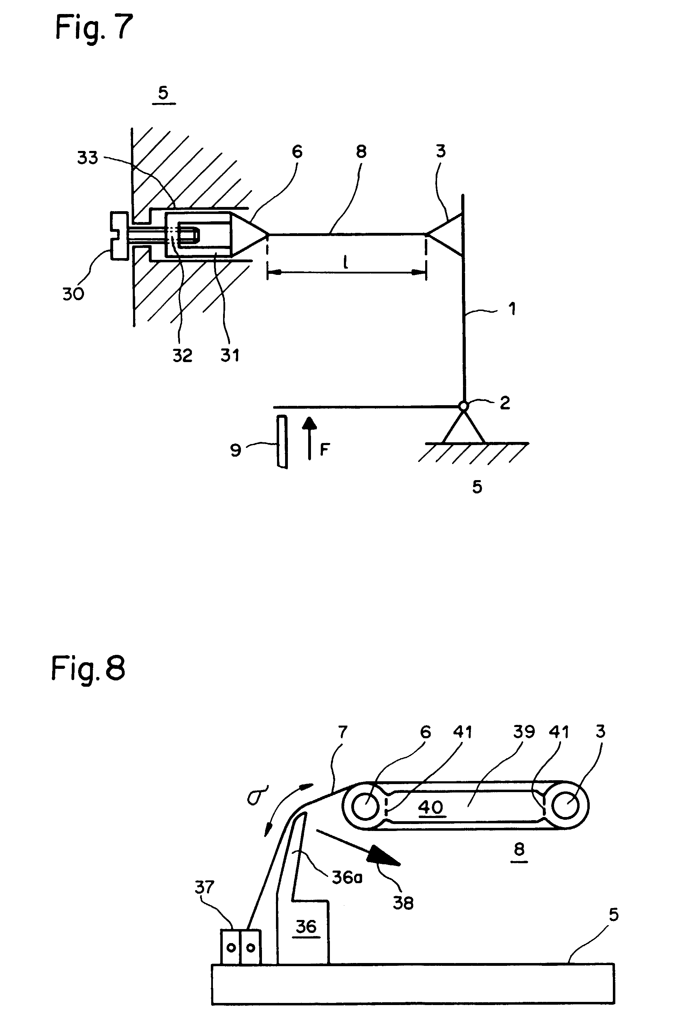

In der prinzipiellen Darstellung der zwischen den beiden Bolzen 3 und 6 aufgespannten Wicklung 8 und des um die Achse 2 drehbaren und auf den Ventilstössel 9 wirkenden Hebels 1 in der Fig. 7, ist mit 30 eine Schraube und mit 31 ein am zweiten Bolzen 6 befestigter Bügel bezeichnet, welcher ein zur Schraube 30 passendes Gewinde 32 aufweist. Die Schraube 30 und der Bügel 31 sind durch ein mit Vorteil am Gehäuse 5 ausgebildetes Führungsmittel 33 derart gelagert und geführt, dass der zweite Bolzen 6 durch Drehen der Schraube 30 in einem gewissen Bereich geradlinig bewegbar ist, wodurch die Wicklung 8 streckbar ist.

Die Schraube 30, der Bügel 31 und das Führungsmittel 33 bilden ein vorteilhaftes Einstellmittel zum Einstellen des Arbeitspunktes des Antriebselementes bzw. der Wicklung 8 auf den Ventilstössel 9, wobei der Arbeitspunkt durch Drehen der Schraube 30 einstellbar ist. Grundsätzlich wird der Arbeitspunkt des Antriebselementes mit dem Einstellmittel durch Strecken bzw. Entspannen des Wicklung 8 eingestellt. Es versteht sich von selbst, dass die Darstellung des Einstellmittels in der Fig. 7 nur eine Variante von einer Vielzahl möglicher Varianten des Einstellmittels ist; eine weitere Variante des Einstellmittels könnte direkt auf den Hebel 1 wirken, womit das zum Einstellen des Arbeitspunktes notwendige Strecken bzw. Entspannen der Wicklung 8 über den Hebel 1 erfolgen würde.

In der Fig. 8 ist mit 36 ein mechanisches Ausgleichselement bezeichnet, über welches der Draht 7 von der Wicklung 8 zu einer Anschlussklemme 37 geführt ist, an welcher die Steuereinrichtung 16 oder eine andere elektrische Spannungs- oder Stromquelle anschliessbar ist. Das Ausgleichselement 36 ist so gestaltet und angeordnet, dass eine im Draht 7 zwischen dem zweiten Bolzen 6 und der Anschlussklemme 37 beim direkten Heizen des Drahtes 7 auftretende mechanische Zugspannung σ begrenzt wird. Das Ausgleichselement 36 weist beispielhaft eine federnde Zunge 36a auf, welche bei grösser werdender Zugspannung σ in der Richtung eines weiteren Pfeiles 38 so weit auslenkbar ist, dass die Zugspannung σ beim direkten Heizen immer auf einen zulässigen Wert begrenzt wird, so dass der Draht 7 mechanisch nicht überbeansprucht wird.

Vorteilhafterweise ist das mechanische Ausgleichselement 36 aus einem Polymer, welches elastisch, elektrisch isolierend und temperaturbeständig ist und zudem Wärme schlecht ableitet.

Das Ausgleichselement 36 und die Anschlussklemme 37 bilden ein vorteilhaftes elektrisches Anschlussmittel für die Wicklung 8 bei dem eine bei direktem Heizen zwischen der Anschlussklemme 37 und der Verankerung 6 der Wicklung 8 auftretende Zugspannung σ durch eine elastische Formänderung des Ausgleichselementes 36 auf einen zulässigen Wert begrenzt wird.

Zur Herstellung der Wicklung 8 wird mit Vorteil ein wenigstens einen Steg 39 aufweisender Wickelkörper 40 verwendet, der zum Einbauen der Wicklung 8 in das Gehäuse 5 über die beiden Bolzen 3 und 6 schiebbar ist, wobei nach dem Einbauen der Wicklung 8 in das Gehäuse 5 und vor der Inbetriebnahme der Antriebseinrichtung der Steg 39 wieder entfernt wird, so dass die beiden Bolzen 3 und 6 durch die Wicklung 8 gegeneinander bewegbar sind. Mit Vorteil weist der Steg 39 Sollbruchstellen 41 auf, durch welche der Steg 39 durch Herausbrechen entfernbar ist,

## Patentansprüche

1. Antriebseinrichtung mit einem Antriebselement aus einer den Einwegeffekt aufweisenden Formgedächtnislegierung für reversible Bewegungen an einem Stellglied (9), bei der das Antriebselement auf einen um eine Achse (2) drehbaren Hebel (1) entgegen der Kraft eines Rückstellelements wirkt, wobei der Hebel (1) als Kopplungsglied zur Übertragung einer Formänderung des Antriebselementes in eine Bewegung am Stellglied (9) nutzbar ist, und bei dem das Antriebselement einen Draht (7) mit im wesentlich parallel verlaufenden Drahtstücken aufweist, die so zwischen einer Verankerung (6) und dem Hebel (1) angeordnet und befestigt sind, daß der Hebel (1) durch eine Formänderung eines Drahtstücks um die Achse (2) drehbar ist und die durch das Antriebselement auf den Hebel (1) wirkende Zugkraft aus den Einzelkräften von Drahtstücken resultiert,
**dadurch gekennzeichnet,**
daß Drahtstücke des Antriebselements Windungen einer Wicklung (8) des Drahtes (7) bilden, die zwischen der Verankerung (6) und dem Hebel (1) mechanisch parallel geschaltet sind.

2. Antriebseinrichtung nach Anspruch 1, **dadurch gekennzeichnet,**
dass das Antriebselement (8) und das Rückstellelement so ausgebildet sind, dass der Draht (7) sich bei einem Aufheizen über eine vorbestimmte Temperatur (A_{S}) wesentlich verkürzt, so dass die Bewegung des Antriebselementes (8) das Stellglied (9) in eine erste Endlage setzt und der Draht (7) sich bei einem Abkühlen unter eine weitere vorbestimmte Temperatur (A_{S}) durch die Kraft des Rückstellelementes wesentlich streckt, so dass die Bewegung des Antriebselementes (8) das Stellglied (9) in eine zweite Endlage bringt.

3. Antriebseinrichtung nach einem der vorangehenden Ansprüche, **dadurch gekennzeichnet,**
dass der Durchmesser (d_{D}) des Drahtes (7) aus der Formgedächtnislegierung gleich gross wie der gemittelte Durchmesser (d_{K}) des kristallinen Kornes der Formgedächtnislegierung im austenitischen Zustand ist.

4. Antriebseinrichtung nach einem der vorangehenden Ansprüche, **dadurch gekennzeichnet,**
dass der Durchmesser des Drahtes aus der Formgedächtnislegierung kleiner als 0.4 mm ist.

5. Antriebseinrichtung nach einem der vorangehenden Ansprüche, **dadurch gekennzeichnet,**
dass die Formgedächtnislegierung eine Nickel-Titan Legierung ist.

6. Antriebseinrichtung nach einem der vorangehenden Ansprüche, **gekennzeichnet durch**
eine an den Draht schaltbare elektrische Energiequelle (19), durch welche der Draht (7) direkt elektrisch heizbar ist.

7. Antriebseinrichtung nach Anspruch 6, **gekennzeichnet durch**
eine elektronische Messschaltung (20), durch welche eine Änderung des elektrischen Widerstandes (R) des Drahtes (7) erfassbar ist, wobei durch die Messschaltung (20) an einem Ausgang (21) ein elektrisches Signal mit dem aktuellen Formzustand des Antriebselementes (8) bzw. dem aktuellen Zustand des Stellgliedes (9) erzeugbar ist.

8. Antriebseinrichtung nach einem der vorangehenden Ansprüche, **gekennzeichnet durch**
ein Einstellmittel (30, 31, 33) durch welches die zwischen den beiden Bolzen (3, 6) aufgespannte Wicklung (8) zur Einstellung des mechanischen Arbeitspunktes weiter spannbar bzw. entspannbar ist.

9. Antriebseinrichtung nach einem der vorangehenden Ansprüche, **dadurch gekennzeichnet,**
dass ein elektrisches Anschlussmittel für die Wicklung (8) eine Anschlussklemme (37) und ein mechanisch elastisches Ausgleichselement (36) aufweist,
wobei die beiden Enden des Drahtes (7) an der Anschlussklemme befestigbar sind und wobei das Ausgleichselement (36) so ausgeführt und angeordnet ist, dass eine in dem an der Anschlussklemme (37) befestigten Draht (7) bei direktem Heizen zwischen der Anschlussklemme (37) und der Verankerung (6) der Wicklung (8) auftretende Zugspannung (σ) durch eine elastische Formänderung des Ausgleichselementes (36) auf einen zulässigen Wert begrenzt wird.

## Claims

1. A drive apparatus having a drive element comprising a shape memory alloy having tne one-way effect for reversible movements at an actuator (9), in which the drive element acts against the force of a return element on a lever (1) rotatable about a spindle (2), wherein the lever (1) can be used as a coupling member for converting a change in shape of the drive element into a movement at the actuator (9), and in which the drive element has a wire (7) with wire portions which extend substantially parallel and which are so arranged and fixed between an anchorage (6) and the lever (1) that the lever (1) is rotatable about the spindle (2) by a change in shape of a wire portion and the tensile force acting on the lever (1) by the drive element results from the individual forces of wire portions,
characterised in that wire portions of the drive element form turns of a winding (8) of the wire (7) which are mechanically connected in parallel relationship between the anchorage (6) and the lever (1).

2. A drive apparatus according to claim 1 characterised in that the drive element (8) and the return element are such that the wire (7) is substantially shortened when heated above a predetermined temperature (As) so that the movement of the drive element (8) puts the actuator (9) into a first end position and the wire (7) substantially extends when cooled below a further predetermined temperature (A_{S}) by virtue of the force of the return element so that the movement of the drive element (8) brings the actuator (9) into a second end position.

3. A drive apparatus according to one of the preceding claims characterised in that the diameter (d_{D}) of the wire (7) of the shape memory alloy is equal to the averaged diameter (d_{K}) of the crystalline grain of the shape memory alloy in the austenitic state.

4. A drive apparatus according to one of the preceding claims characterised in that the diameter of the wire of the shape memory alloy is less than 0.4 mm.

5. A drive apparatus according to one of the preceding claims characterised in that the shape memory alloy is a nickel-titanium alloy.

6. A drive apparatus according to one of the preceding claims characterised by an electrical energy source (19) which can be connected to the wire and by which the wire (7) can be directly electrically heated

7. A drive apparatus according to claim 6 characterised by an electronic measuring circuit (20) for detecting a change in the electrical resistance (R) of the wire (7), wherein an electrical signal can be produced by the measuring circuit (20) at an output (21), with the current state in respect of shape of the drive element (8) or the current state of the actuator (9).

8. A drive apparatus according to one of the preceding claims characterised by an adjusting means (30, 31, 33) by which the winding (8) tensioned between the two bolts (3. 6) can be further tensioned or relieved of tension to adjust the mechanical operating point

9. A drive apparatus according to one of the preceding claims characterised in that an electrical connecting means for the winding (8) has a connecting terminal (37) and a mechanically elastic compensating element (36), wherein the two ends of the wire (7) can be fixed to the connecting terminal and wherein the compensating elements (36) is of such a configuration and arrangement that a tensile stress (σ) which occurs in the wire (7) fixed to the connecting terminal (37) upon direct heating between the connecting terminal (37) and the anchorage (6) of the winding (8) is limited to a permissible value by an elastic variation in shape of the compensating element (36).

## Revendications

1. Dispositif d'entraînement comportant un élément d'entraînement formé d'un alliage à mémoire de forme produisant un effet unidirectionnel, pour des déplacements réversibles appliqués à un organe de réglage (9), dans lequel l'élément d'entraînement agit sur un levier (1) qui peut tourner autour d'un axe (2), à l'encontre de la force d'un élément de rappel, le levier (1) pouvant être utilisé en tant qu'organe d'accouplement pour convertir un changement de forme de l'élément d'entraînement en un déplacement au niveau de l'organe de réglage (9), et dans lequel l'élément d'entraînement comporte un fil (7) possédant des tronçons de fil qui sont essentiellement parallèles et qui sont disposés et fixés entre un ancrage (6) et le levier (1) de telle sorte que le levier (1) peut tourner autour de l'axe (2) sous l'effet d'un changement de forme d'un tronçon de fil, et la force de traction, appliquée par l'élément d'entraînement au levier (1), résulte des forces individuelles de tronçons de fil, caractérisé en ce
que des tronçons de fil de l'élément d'entraînement forment des spires d'un enroulement (8) du fil (7), qui sont disposées mécaniquement en parallèle entre l'ancrage (6) et le levier (1).

2. Dispositif d'entraînement selon la revendication 1, caractérisé en ce
que l'élément d'entraînement (8) et l'élément de rappel sont agencés de telle sorte que, dans le cas d'un chauffage au-delà d'une température prédéterminée (Aₛ), le fil (7) est fortement réduit de sorte que le déplacement de l'élément d'entraînement (8) déplace l'organe de réglage (9) dans une première position d'extrémité et que, lors d'un refroidissement au-dessous d'une autre température prédéterminée (Aₛ), le fil (7) s'étire fortement sous l'effet de la force de l'élément de rappel de sorte que le déplacement de l'élément d'entraînement (8) amène l'organe de réglage (9) dans une seconde position d'extrémité.

3. Dispositif d'entraînement selon l'une des revendications précédentes, caractérisé en ce que le diamètre (d_{D}) du fil (7) constitué par l'alliage à mémoire de forme est égal au diamètre moyen (d_{K}) du grain cristallin de l'alliage à mémoire de forme dans l'état austénitique.

4. Dispositif d'entraînement selon l'une des revendications précédentes, caractérisé en ce que le diamètre du fil formé par l'alliage à mémoire de forme est inférieur à 0,4 mm.

5. Dispositif d'entraînement selon l'une des revendications précédentes, caractérisé en ce que l'alliage à mémoire de forme est un alliage nickel-titane.

6. Dispositif d'entraînement selon l'une des revendications précédentes, caractérisé par une source d'énergie électrique (19), qui peut être connectée au fil et à l'aide de laquelle le fil (7) peut être chauffé directement par voie électrique.

7. Dispositif d'entraînement selon la revendication 6, caractérisé par un circuit de mesure électronique (20), au moyen duquel une variation de la résistance électrique (R) du fil (7) peut être détectée, un signal électrique pouvant être produit au niveau d'une sortie (21), par le circuit de mesure (20), avec l'état actuel de forme de l'élément d'entraînement (8) ou avec l'état actuel de l'organe de réglage (9).

8. Dispositif d'entraînement selon l'une des revendications précédentes, caractérisé par
un moyen de réglage (30, 31, 33), à l'aide duquel l'enroulement (8) tendu entre les deux goujons (3, 6) peut être tendu de façon supplémentaire ou détendu pour le réglage du point de fonctionnement mécanique.

9. Dispositif d'entraînement selon l'une des revendications précédentes, caractérisé en ce
qu'un moyen de connexion électrique pour l'enroulement (8) comporte une borne de raccordement (37) et un élément de compensation mécaniquement élastique (36),
les deux extrémités du fil (7) pouvant être fixées à la borne de raccordement, et l'élément de compensation (36) étant agencé et disposé de sorte qu'une tension de traction (a), qui apparaît dans le fil (7) fixé à la borne de connexion (37), lors du chauffage direct, entre la borne de connexion (37) et l'ancrage (6) de l'enroulement (8), est limitée à une valeur admissible, par un changement de forme élastique de l'élément de compensation (36).
